# EUROPÄISCHE PATENTSCHRIFT

(11) **EP 2 017 520 B1**
(45) Veröffentlichungstag und Bekanntmachung des Hinweises auf die Patenterteilung: **31.07.2013**
(21) Anmeldenummer: 08010233.8
(22) Anmeldetag: 05.06.2008
(51) Int. Cl.: F16L 37/14

(54) **Kombination aus einem Thermostaten und einem Kühlergehäuse sowie ihrer Befestigungsvorrichtung**
Assembly of Thermostat and radiatorhousing, as well as their attaching device
Ensemble thermostat et radiateur, ainsi que leur dispositif de liaison

(30) Priorität: 19.07.2007 DE 102007033949
(43) Veröffentlichungstag der Anmeldung: 21.01.2009
(73) Patentinhaber: Gustav Wahler GmbH u. Co.KG, 73730 Esslingen (DE)
(72) Erfinder: Clauss, Christof, 73734 Esslingen (DE)
(74) Vertreter: Witte, Weller & Partner

(56) Entgegenhaltungen:
- EP-A2- 0 392 234
- DE-A1-102008 046 143
- FR-A1- 2 186 619
- US-A1- 2005 136 741

## Beschreibung

Die Erfindung bezieht sich auf eine Kombination aus einem Thermostaten mit einem Gehäusebauteil mit an diesem festem Anschlussteil und mit einem Kühlergehäuse mit an diesem festem Anschlussteil.

Die Befestigung vorgenannter Teile aneinander herkömmlicher Weise ist relativ aufwendig und kompliziert. Befestigungsvorrichtungen hierzu sind kostenaufwendig. Das Befestigen oder je nach Gegebenheit notwendige Lösen eines Gehäusebauteiles und eines Funktionselements, die mittels einer Befestigungsvorrichtung verbunden sind, gestaltet sich mitunter schwierig und aufwendig. Eine Schnellkupplung für die Verbindung von Teilen an Kühlermist aus EP-A-0-392 234 bekannt.

Der Erfindung liegt die Aufgabe zugrunde, eine Kombination der eingangs genannten Art so auszubilden, dass diese einfach, kostengünstig und platzsparend ist und eine einfache und schnelle Verbindung des Thermostaten mit dem Kühlergehäuse bzw. bedarfsweise schnelle und einfache Trennung dieser voneinander ermöglicht.

Die Aufgabe ist bei einer Kombination der eingangs genannten Art gemäß der Erfindung gelöst durch die Merkmale im Anspruch 1. Weitere vorteilhafte Erfindungsmerkmale sowie Ausgestaltungen ergeben sich aus den Unteransprüchen. Mittels der Befestigungsvorrichtung kann in einfacher und zuverlässiger Weise der Thermostat mit einem Gehäusebauteil seines Gehäuses direkt an dem Kühlergehäuseteil des Kühlergehäuses eines Kühlers einer Brennkraftmaschine, insbesondere für Kraftfahrzeuge, befestigt werden. Dies geschieht in Form der Befestigungsvorrichtung mit außerordentlich einfachen und kostengünstigen Mitteln bei nur kleinem benötigtem Bauraum. Die Befestigung ist durch Zusammenstecken und Schnappfunktion schnell, einfach ohne Spezialwerkzeuge und ohne Fachwissen herstellbar. Bei Bedarf ist diese Befestigung mittels der Befestigungsvorrichtung auch schnell wieder lösbar, so dass z. B. bedarfsweise schnell ein Gehäusebauteil eines Thermostaten vom Kühlergehäuseteil abgelöst und gegen ein anderes Gehäusebauteil ausgetauscht werden kann, das ebenfalls in gleicher Weise mittels der Befestigungsvorrichtung durch Zusammenstecken und Verrasten befestigt wird.

Eine vorteilhafte Ausgestaltung der Erfindung sieht vor, dass zwischen den Anschlussteilen, insbesondere zwischen dem Hülsenteil und dem Einsteckteil, eine axial wirkende Lösevorrichtung zum Lösen der Steckverbindung durch axiales Auseinanderschieben angeordnet ist. Diese Lösevorrichtung ist vorzugsweise drehbetätigbar. Eine derartige Lösevorrichtung ist immer dann verwirklicht, wenn z.B. ein Schwenkelement auf einem Abschnitt des einen Anschlussteils, z.B. des Hülsenteils, vorgesehen ist, das am anderen Anschlussteil, z.B. am Einsteckelement, axial abgestützt ist und das bei Schwenkbetätigung oder Drehbetätigung derart auf das Hülsenteil axial einwirkt, dass dieses axial vom Einsteckelement weg und derart verschoben wird, dass die Steckverbindung auf diese Weise durch Axialkraft gelöst wird. Die Lösevorrichtung hat den Vorteil, dass durch Drehbetätigung um einen relativ kleinen Umfangswinkel, z.B. in der Größenordnung von 40°, ein leichtgängiges Auseinanderschieben der beiden Anschlussteile geschieht, wobei schon ein relativ kleiner Verschiebeweg zum Trennen der Steckverbindung ausreichend ist. Es bedarf lediglich der Aufbringung eines geringen Schwenkmoments durch Drehung des Schwenkelements, um eine axial große Lösekraft zum Auseinanderschieben der beiden Anschlussteile zu erzeugen. Dabei wirkt eine zentrale Axialkraft, was dazu führt, dass die Kräfte zum Auseinanderschieben der Steckverbindung in Umfangsrichtung an allen Stellen gleich groß sind, so dass ein etwaiges Verkanten und ein Wirken etwaiger Biegemomente ausgeschlossen ist. Die Lösevorrichtung macht es daher möglich, je nach Gestaltung z.B. ein Thermostatbauteil mit Thermostat leicht und in einfacher Weise von einem Kühlergehäuseteil bei Bedarf axial zu lösen. Das Kühlergehäuseteil, z.B. ein Anschlussstutzen am Kühler, wird dabei nicht belastet. Die Lösevorrichtung ermöglicht ein Lösen der Steckverbindung auch bei sehr beengten Raumverhältnissen, die für etwaige Werkzeuge od.dgl. nur schlecht zugänglich sind. Bei allem ist die Lösevorrichtung einfach, funktionssicher und immer präsent, wenn in vorteilhafter Weise deren Schwenkelement an einem Anschlussteil, z.B. dem Hülsenteil, verliersicher gehalten ist. Von Vorteil ist ferner auch eine klapperfreie Anordnung des Schwenkelements an einem Anschlussteil.

Eine Lösevorrichtung vorgenannter Art ist z.B. dann verwirklicht, wenn diese an zumindest einem Anschlussteil einen Abschnitt mit einem Gewindegangbereich und auf dem Abschnitt ein Schwenkelement mit einem mit dem Gewindegangbereich zusammenwirkenden eigenen Gewindegangbereich aufweist, das am anderen Anschlussteil axial abgestützt ist. Hierbei kann das Schwenkelement die Form einer Mutter haben, durch deren Drehung in einer Richtung auf dem Gewindegang eines Anschlussteils, z.B. des Hülsenteils, eine Axialkraft zwischen letzterem und dem anderen Anschlussteil, z.B. Einsteckelement, erzeugbar ist. Der Gewindegangbereich des Abschnitts kann als Außengewinde oder Teil dieses und der andere Gewindegangbereich des Schwenkelements als Innengewinde oder Teil dieses ausgebildet sein.

Eine Lösevorrichtung gemäß dieser Ausgestaltung der Erfindung kann in vorteilhafter Weise auch eine drehbetätigbare Keilvorrichtung zwischen den Anschlussteilen aufweisen. Diese Keilvorrichtung kann z.B. ein vorzugsweise scheibenförmiges oder ringförmiges Schwenkelement mit zumindest in einer Drehrichtung axial ansteigender, an einem Anschlussteil, z.B. dem Hülsenteil, zu dessen Verschiebung anliegender Stirnfläche oder anliegendem Stirnflächenabschnitt auf zumindest einer Axialseite aufweisen, wobei das Schwenkelement an dem anderen Anschlussteil, z.B. dem Einsteckelement, axial abgestützt ist. Von Vorteil kann es ferner sein, wenn zumindest ein Anschlussteil, z.B. das Hülsenteil, einen Abschnitt mit einem oder mehreren axialen Vorsprüngen mit stirnseitiger, in Umfangsrichtung zumindest in einer Richtung axial abfallender Schrägfläche aufweist, wobei das vorzugsweise ringförmige Schwenkelement auf dem Abschnitt drehbar gehalten ist und einen oder mehrere axiale Gegenvorsprünge mit stirnseitiger, in zumindest einer Drehrichtung ansteigender Schrägfläche aufweist, die axial gegen die Schrägfläche des Anschlussteiles, z.B. Hülsenteiles, drückt. Hierbei ist das Schwenkelement ebenfalls an dem anderen Anschlussteil, z.B. dem Einsteckelement, axial abgestützt. Von Vorteil ist es, wenn das Schwenkelement zumindest eine vorzugsweise radial abstehende Handhabe aufweist. Dadurch ist das Schwenkelement auch bei beengten Platzverhältnissen einfach zur Drehbetätigung fassbar.

Die Erfindung ist nachfolgend anhand eines in der Zeichnung gezeigten Ausführungsbeispieles näher erläutert. Es zeigen
- Fig. 1: eine schematische, teilweise geschnittene Seitenansicht eines Gehäusebauteils eines Thermostaten, das mittels einer im Schnitt dargestellten Befestigungsvorrichtung an einem Funktionselement einer Brennkraftmaschine befestigt ist,
- Fig. 2: eine schematische Ansicht in Pfeilrichtung II in Fig.1 eines an einem Gehäusebauteil sitzenden Anschlussteils der Befestigungsvorrichtung vor dem Aufstecken auf das andere Anschlussteil am Funktionselement,
- Fig. 3: einen schematischen Schnitt ähnlich demjenigen in Fig. 1 eines zweiten Ausführungsbeispiels der Befestigungsvorrichtung bei ineinandergesteckten Anschlussteilen,
- Fig. 4: einen schematischen Schnitt der Befestigungsvorrichtung entsprechend demjenigen in Fig. 3, wobei jedoch die Anschlussteile voneinander gelöst und auseinandergeschoben sind,
- Fig. 5: eine schematische perspektivische Ansicht des Schwenkelements einer Lösevorrichtung.

In der Zeichnung ist eine Befestigungsvorrichtung 10 gezeigt, die zur Befestigung eines nur schematisch angedeuteten Gehäusebauteiles 11 an einem ebenfalls nur schematisch angedeuteten Funktionselement 32 ausgebildet ist. Bei dem Gehäusebauteil 11 kann es sich mit besonderem Vorteil z. B. um ein Teil des Gehäuses 12 eines Thermostaten 13 handeln, der Teil des Kühlkreislaufs einer Brennkraftmaschine, insbesondere für Fahrzeuge, ist. Bei dem Funktionselement 32 handelt es sich z. B. um einen Teil eines Kühlergehäuses 33 eines Kühlers 34 oder dergleichen Wärmeaustauschers als Bestandteil eines Kühlkreislaufes einer Brennkraftmaschine.

Die Befestigungsvorrichtung 10 weist ein am Gehäusebauteil 11 festes Anschlussteil 14 und ferner ein am Funktionselement 32 festes Anschlussteil 35 auf, die beide zur lösbaren und flüssigkeitsdichten Steckverbindung durch Zusammenstecken ausgebildet sind. Teil der Befestigungsvorrichtung 10 ist ferner ein Sicherungselement 15, mittels dessen die beiden zusammengesteckten Anschlussteile 14, 35 zusammengehalten werden. Das Sicherungselement 15 ist als etwa U-förmige federelastische Spange 16 ausgebildet, die zwei U-Schenkel 17, 18 und einen letztere miteinander verbindenden Abschnitt 19 aufweist.

Das Sicherungselement 15 und die beiden Anschlussteile 14, 35 sind zur axialen Sicherung der zusammengesteckten Verbindung ausgebildet. Beide Anschlussteile 14, 35 sind jeweils etwa rohrförmig ausgebildet und dabei zum axialen Ineinanderstecken ausgebildet.

Ein Anschlussteil, z. B. das Anschlussteil 35 am Funktionselement 32, ist als Einsteckelement 36 ausgebildet. Das andere Anschlußteil, z. B. das Anschlussteil 14 am Gehäusebauteil 11, ist als Hülsenteil 20 ausgebildet, dass das Einsteckelement 36 beim Zusammenstecken aufnimmt. Das Hülsenteil 20 ist hier am Gehäusebauteil 11 und das Einsteckelement 36 am Funktionselement 32 vorgesehen, wobei die Verhältnisse auch vertauscht sein können.

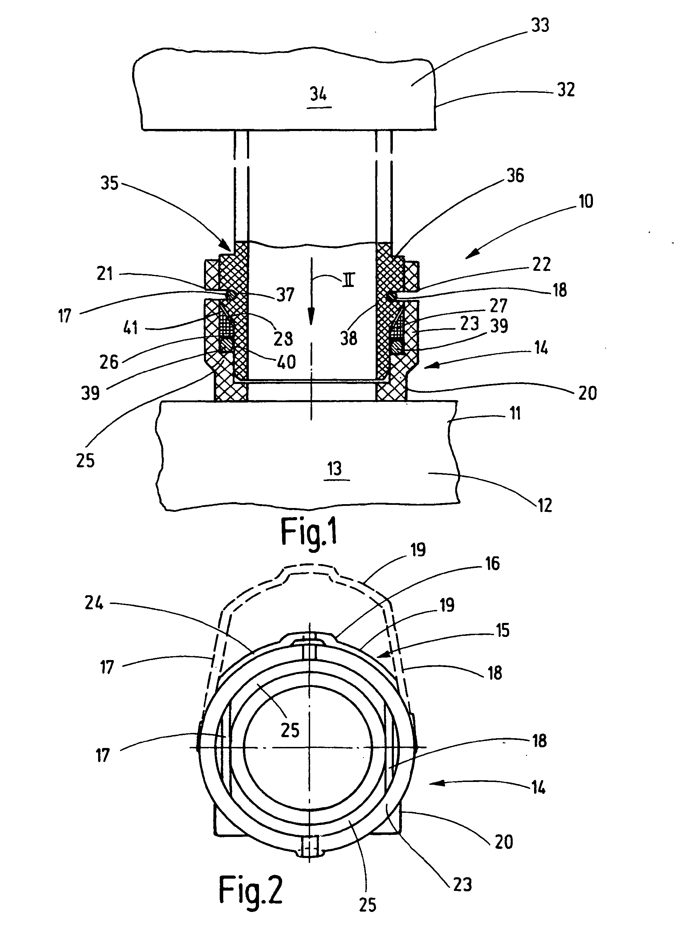

Das Hülsenteil 20 trägt das Sicherungselement 15. Das Sicherungselement 15 kann mit Riegelteilen, die durch die beiden U-Schenkel 17, 18 gebildet sind, durch Schlitze 21, 22 in der Wandung 23 des Hülsenteils 20 hindurch und bis zu zugeordneten Ausnehmungen 37, 38 des eingesteckten Einsteckelements 36 vorzugsweise federelastisch eingreifen, und zwar mit etwa in radialer Richtung wirkender Federkraft. Diese Sicherungsstellung ist in Fig. 1 gezeigt. Das Sicherungselement 15 ist mit den beiden U-Schenkeln 17, 18 in den Schlitzen 21, 22 und mit dem Abschnitt 19 in z. B. einem Umfangsschlitzteil 24 formschlüssig im Hülsenteil 20 aufgenommen und Bestandteil dieses.

Wie Fig. 1 zeigt, ist der Innendurchmesser der beiden Anschlussteile 14 und 35 zumindest annähernd gleichgroß bemessen, so dass ein möglichst ungehinderter, verlustfreier Strömungsdurchgang durch die Anschlussteile 14, 35 erreicht ist. Axial ist zwischen dem Hülsenteil 20 und dem Einsteckelement 36 ein Dichtungselement 39, insbesondere ein O-Ring, angeordnet. Das Dichtungselement 39 in Form des O-Ringes ist zwischen zwei axial beabstandeten radialen Stützflächen 25 und 26 des Hülsenteils 20 axial gehalten und liegt an der äußeren Umfangsfläche 40 des Einsteckelements 36 an. Eine Stützfläche 26 ist an einem Stützring 27 gebildet, der auf der der Stützfläche 26 axial abgewandten Seite eine Kegelstumpffläche 28 trägt, die sich in Einsteckrichtung des Einsteckelements 36 verjüngt. Die Kegelstumpffläche 28 wirkt mit einer am Einsteckelement 36 vorgesehenen Kegelstumpffläche 41 zusammen, die sich ebenfalls in Einsteckrichtung verjüngt. Auf diese Weise wird beim Zusammenstecken beider Anschlussteile 14, 35 ein entsprechender axial gerichteter Druck auf das Dichtungselement 39 ausgeübt, der ein Andrücken an die Umfangsfläche 40 und damit eine Abdichtung der Steckverbindung zur Folge hat.

Beide Anschlussteile 14, 35 sind aus Kunststoff gebildet. In besonders vorteilhafter Gestaltung ist die Befestigungsvorrichtung 10 als Schnellsteckkupplung ausgebildet, insbesondere VDA-Schnellkupplung.

Das eine Anschlussteil, z. B. das Anschlußteil 14, ist einstückiger Bestandteil des Gehäusebauteils 11, insbesondere eines Thermostaten 13, und ist zusammen mit diesem Gehäusebauteil 11 als Kunststoffspritzteil gebildet. Das andere Anschlussteil, z. B. das Anschlussteil 35, ist einstückiger Bestandteil des Funktionselements 32, insbesondere eines Kühlergehäuseteils 33 einer Brennkraftmaschine, und ist zusammen mit diesem als Kunststoffspritzteil gebildet. Auf diese Weise ist das Gehäusebauteil 11 eines Thermostaten 13 mit einem Anschlussteil 14 an einem zugeordneten Anschlussteil 35 eines Kühlergehäuseteils 33 lösbar befestigbar.

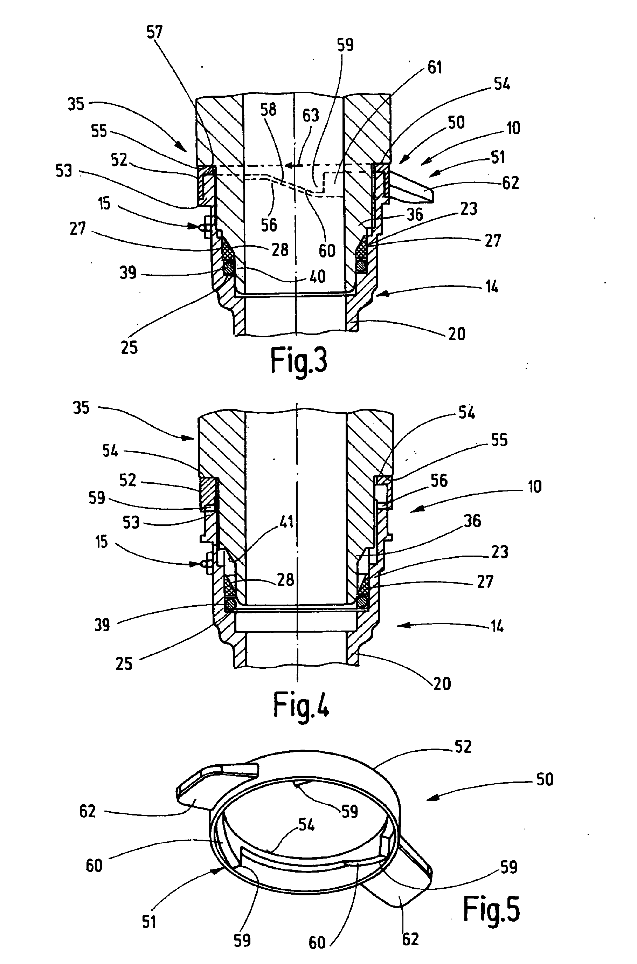

Bei dem in Fig. 3 bis 5 gezeigten Ausführungsbeispiel sind für die Teile, die dem ersten Ausführungsbeispiel in Fig. 1 und 2 entsprechen, gleiche Bezugszeichen verwendet, so dass dadurch zur Vermeidung von Wiederholungen auf die Beschreibung des ersten Ausführungsbeispieles Bezug genommen ist.

In Fig. 3 ist die Befestigungsvorrichtung 10 in einem Zustand gezeigt, in dem die Anschlussteile 14, 35, insbesondere das Hülsenteil 20 und das Einsteckelement 36, axial unter Herstellung der Verbindung zusammengesteckt und miteinander mittels des Sicherungselements 15 gesichert sind. In Fig. 4 hingegen ist ein Zustand gezeigt, bei dem die Steckverbindung gelöst ist durch axiales Auseinanderschieben der Anschlussteile 14, 35 relativ zueinander, insbesondere durch axiales Verschieben des Hülsenteiles 20 weg vom Einsteckelement 36. Um dieses axiale Lösen durch Auseinanderschieben der Steckverbindung in einfacher Weise zu ermöglichen, ist zwischen den Anschlussteilen 14, 35 eine axial wirkende, vorzugsweise drehbetätigbare Lösevorrichtung 50 vorgesehen. Generell weist diese Lösevorrichtung 50 eine drehbetätigbare Keilvorrichtung 51 zwischen den beiden Anschlussteilen 14 und 35 auf. Einzelheiten dieser sind vor allem in Fig. 3 und 5 gezeigt. Generell kann diese Keilvorrichtung 51 ein z.B. scheibenförmiges oder, wie in Fig. 3 und 5 vorgesehen, ein etwa ringförmiges Schwenkelement 52 aufweisen, das auf einem Abschnitt 53 des einen Anschlussteils 14, insbesondere des Hülsenteils 20, drehbar gehalten ist. Dabei ist es von Vorteil, wenn das Schwenkelement 52 auf dem Abschnitt 53 des Hülsenteils 20 zugleich verliersicher gehalten ist, so dass das Schwenkelement 52 permanent vorhandener Bestandteil dieses einen Anschlussteils 14 ist und bei dessen Aufstecken auf den anderen Anschlussteil 35 und nach Herstellen der Steckverbindung jederzeit verfügbar ist.

Dieses scheibenförmige oder gemäß Zeichnung etwa ringförmige Schwenkelement 52 kann eine zumindest in einer Drehrichtung axial ansteigende Stirnfläche oder einen entsprechenden Stirnflächenabschnitt auf zumindest einer freien oder umringten Axialseite aufweisen, z.B. auf der Axialseite, die dem einen Anschlussteil 14, insbesondere Hülsenteil 20, zugewandt ist. Mit der gegenüberliegenden radial und eben verlaufenden Axialseite 54 ist das Schwenkelement 52 an dem anderen Anschlussteil 35 an einer dortigen entsprechenden Schulter 55 axial abgestützt. Die in zumindest einer Drehrichtung axial ansteigende Stirnfläche oder der betreffende Stirnflächenabschnitt des Schwenkelements 52 hat bei scheibenförmiger Gestaltung oder ringförmiger Gestaltung eine hier nicht gezeigte in Umfangsrichtung durchlaufende Kontur. Die Stirnfläche steigt ausgehend von einer Stelle axial an, betrachtet in einer Drehrichtung, wobei bei 360° Umfangswinkel der größte axiale Abstand in Richtung zum Hülsenteil 20 vorliegt. Mit dieser Stirnseite liegt das Schwenkelement 52 an dem einen Anschlussteil 14, z.B. Hülsenteil 20, zu dessen Axialverschiebung bei Drehbetätigung des Schwenkelements 52 in der einen Drehrichtung an.

Beim gezeigten Ausführungsbeispiel weist das eine Anschlussteil 14, insbesondere Hülsenteil 20, beim Abschnitt 53 mindestens einen freien oder umringten axialen Vorsprung 56 auf, der der besseren Übersicht wegen lediglich in Fig.3 und dort nur schematisch gestrichelt angedeutet ist. Tatsächlich sind mehrere derartige Vorsprünge 56 in Umfangsrichtung, vorzugsweise in etwa gleichen Umfangswinkelabständen voneinander, vorgesehen. Jeder Vorsprung 56 befindet sich etwa auf der axial gerichteten freien oder umringten Stirnseite 57 des Abschnitts 53 des Hülsenteils 20 etwa in Form axial vorspringender oder bei umringter Gestaltung axial zurückgesetzter Stirnzähne. Jeder Vorsprung 56 weist eine stirnseitige, in Umfangsrichtung zumindest in einer Richtung axial abfallende Schrägfläche 58 auf, wie in Fig. 3 gestrichelt angedeutet ist.

Das ringförmige Schwenkelement 52 weist auf der Innenseite des Ringes mindestens einen axialen Gegenvorsprung 59 auf. Auch dieser hat eine stirnseitige, in zumindest einer Drehrichtung axial ansteigende Schrägfläche 60, die axial gegen die zugeordnete Schrägfläche 58 des Anschlussteils 14 drücken kann. Das z.B. ringförmige Schwenkelement 52 ist mit seiner innerhalb einer radialen Ebene verlaufenden Axialseite 54 an der zugeordneten Schulter 55 axial abgestützt. Die Schrägflächen 60 können im in Fig. 3 gezeigten gekuppelten Zustand an den zugeordneten Schrägflächen 58 anliegen. Zwingend ist dies nicht, da das Schwenkelement 52 bei den in Fig. 3 gezeigten zusammengesteckten Anschlussteilen 14, 35 auch in einer solchen Drehstellung verliersicher und klapperfrei gehalten sein kann, in der der jeweilige Gegenvorsprung 59 in einer Lücke 61 zwischen zwei in Umfangsrichtung aufeinanderfolgenden Vorsprüngen 56 Platz findet.

Das Schwenkelement 52 weist zumindest eine vorzugsweise etwa radial abstehende Handhabe auf, z.B. in Form von zwei etwa diametral gegenüberliegenden abstehenden Lappen 62.

Soll die Steckverbindung gemäß Fig. 3 zwischen den beiden Anschlussteilen 14 und 35 durch axiales Auseinanderschieben gelöst und die Steckverbindung in den in Fig. 4 gezeigten Zustand überführt werden, so wird an den Lappen 62 des Schwenkelements 52 von Hand oder mittels eines Werkzeuges angegriffen und das Schwenkelement 52 relativ zum Anschlussteil 14 derart in einer Drehrichtung gemäß Pfeil 63 gedreht, dass der Gegenvorsprung 59 mit seiner keilförmigen Schrägfläche 60 auf der keilförmigen Schrägfläche 58 eines Vorsprungs 56 aufläuft und entlang dieser sich verschiebt. Dies hat eine axial gerichtete, auf das Hülsenteil 20 ausgeübte Kraft zur Folge, die bewirkt, dass dieses Anschlussteil 14, insbesondere Hülsenteil 20, in Fig. 3 axial nach unten relativ zum nicht bewegten anderen Anschlussteil 35, insbesondere Einsteckelement 36, verschoben wird. Das Anschlussteil 14, insbesondere Hülsenteil 20, wird vom anderen Anschlussteil 35 weg verschoben, so, dass dieses Anschlussteil 14, z.B. Thermostatbauteil eines Thermostaten, entfernt werden kann.

Die Lösevorrichtung 50 ermöglicht ein einfaches Lösen der Steckverbindung, wobei eine Drehbetätigung des Schwenkelements 52 um nur einen kleinen Drehwinkel z.B. in der Größenordnung von 40° bereits ausreichend ist, um eine Axialverschiebung und ein Lösen herbeizuführen. Die Drehbetätigung des Schwenkelements 52 erfordert nur ein geringes Moment. Dabei werden große axiale Lösekräfte erzeugt. Diese wirken axial, so dass etwaige Biegebeanspruchungen am anderen Anschlussteil 35, z.B. Einsteckelement 36, oder an dem dieses tragenden Bauteil, z.B. eines Kühlers, ausgeschaltet sind.

## Patentansprüche

1. Kombination aus einem Thermostaten (13) mit einem Gehäusebauteil (11) mit an diesem festem Anschlussteil (14) und mit einem Kühlergehäuse (33) mit an diesem festem Anschlussteil (35) und mit einer Befestigungsvorrichtung in Form einer das Anschlussteil (14) des Thermostaten (13) und das Anschlussteil (35) des Kühlergehäuses (33) lösbar und flüssigkeitsdicht zusammenhaltenden Steckverbindung mit einem Sicherungselement (15), das beide zusammengesteckte Anschlussteile (14, 35) axial sichert, wobei das eine Anschlussteil (14) einstückiger Bestandteil des Thermostaten (13) ist und zusammen mit diesem als Kunststoffspritzteil ausgebildet ist und/oder das andere Anschlussteil (35) einstückiger Bestandteil des Kühlergehäuses (33) ist und zusammen mit diesem als Kunststoffspritzteil ausgebildet ist.

2. Kombination nach Anspruch 1,
**dadurch gekennzeichnet,**
**dass** die Anschlussteile (14, 35) jeweils etwa rohrförmig ausgebildet sind.

3. Kombination nach einem der Ansprüche 1 oder 2,
**dadurch gekennzeichnet,**
**dass** ein Anschlussteil (35) als Einsteckelement (36) und das andere Anschlussteil (14) als das Einsteckelement (36) aufnehmendes Hülsenteil (20) ausgebildet sind.

4. Kombination nach einem der Ansprüche 1 bis 3,
**dadurch gekennzeichnet,**
**dass** der Innendurchmesser beider Anschlussteile (14, 35) zumindest annährend gleichgroß bemessen ist.

5. Kombination nach einem der Ansprüche 3 oder 4,
**dadurch gekennzeichnet,**
**dass** das Hülsenteil (20) am Gehäusebauteil (11) und das Einsteckelement (36) am Kühlergehäuse (33), oder umgekehrt, angeordnet ist.

## Claims

1. Combination of a thermostat (13) with a housing part (11), comprising a connection part (14) fixed thereon and a cooler housing (33), comprising a connection part (35) fixed thereon, and comprising a securing device configured as a plug-in connection having a securing element (15) for holding the connection part (14) of the thermostat (13) and the connection device (35) of the cooler housing (33) releasably and liquid tight together, wherein the securing element (15) axially secures both plugged-in connection parts (14, 35), wherein one connection part (14) is a unitary part of the thermostat (13) and is configured together therewith as a molded plastic part and/or the other connection part (35) is a unitary part of the cooler housing (33) and is configured therewith as a molded plastic part.

2. The combination of claim 1, **characterized in that** the connection parts (14, 35) are each configured roughly tubular.

3. The combination of any of claims 1 or 2, **characterized in that** one connection part (35) is configured as a plug-in element (36), and the other connection part (14) is configured as a sleeve part (20) for receiving the plug-in element (36).

4. The combination of any of claims 1 to 3, **characterized in that** the inner diameter of both connection parts (14, 35) is substantially the same.

5. The combination of any of claims 3 or 4, **characterized in that** the sleeve part (20) is arranged on the housing part (11), and **in that** the plug-in element (36) is arranged on the cooler housing (33), or vice versa.

## Revendications

1. Combinaison d'un thermostat (13) avec un composant de boîtier (11) avec une pièce de liaison (14) fixe sur celui-ci et avec une enceinte de radiateur (33) avec une pièce (35) fixe sur celle-ci et avec un dispositif de liaison sous la forme d'un assemblage par emboîtement solidarisant la pièce de liaison (14) du thermostat (13) et la pièce de liaison (35) de l'enceinte de radiateur (33) de façon séparable et étanche aux liquides, avec un élément de fixation (15), qui fixe axialement les deux pièces de liaison emboîtées (14, 35), dans laquelle la première pièce de liaison (14) est un composant d'une seule pièce du thermostat (13) et est formée avec celui-ci sous la forme d'une pièce en matière plastique moulée par injection et/ou l'autre pièce de liaison (35) est un composant d'une seule pièce de l'enceinte de radiateur (33) et est formée avec celle-ci sous la forme d'une pièce en matière plastique moulée par injection.

2. Combinaison selon la revendication 1,
**caractérisée en ce que** les pièces de liaison (14, 35) sont respectivement de forme sensiblement tubulaire.

3. Combinaison selon l'une quelconque des revendications 1 ou 2,
**caractérisée en ce qu'**une pièce de liaison (35) est réalisée sous la forme d'un élément à emboîter (36) et l'autre pièce de liaison (14) est réalisée sous la forme d'une partie de douille (20) recevant l'élément à emboîter (36).

4. Combinaison selon l'une quelconque des revendications 1 à 3,
**caractérisée en ce que** le diamètre intérieur des deux pièces de liaison (14, 35) est de grandeur au moins approximativement égale.

5. Combinaison selon l'une quelconque des revendications 3 ou 4,
**caractérisée en ce que** la partie de douille (20) est disposée sur le composant de boîtier (11) et l'élément à emboîter (36) est disposé sur l'enceinte de radiateur (33), ou inversement.
